# EUROPÄISCHE PATENTSCHRIFT

(11) **EP 4 146 966 B1**
(45) Veröffentlichungstag und Bekanntmachung des Hinweises auf die Patenterteilung: **27.03.2024**
(21) Anmeldenummer: 21726064.5
(22) Anmeldetag: 06.05.2021
(51) Int. Cl.: F16K 31/08, F16K 31/52, F16K 31/524, F16K 31/53, F16K 31/60, F16K 37/00, F16K 47/00, G05G 15/00, F02D 41/22, F16K 31/04, F03G 1/02, F16H 25/20

(54) **FAIL-SAFE-ANTRIEB UND STELLANTRIEB MIT EINEM FAIL-SAFE-ANTRIEB**
FAIL-SAFE DRIVE AND ACTUATING DRIVE WITH A FAIL-SAFE DRIVE
ENTRAÎNEMENT À SÛRETÉ INTÉGRÉE ET MÉCANISME DE COMMANDE POURVU D'UN ENTRAÎNEMENT À SÛRETÉ INTÉGRÉE

(30) Priorität: 08.05.2020 DE 102020112548
(43) Veröffentlichungstag der Anmeldung: 15.03.2023
(73) Patentinhaber: AUMA Riester GmbH & Co. KG, 79379 Müllheim (DE)
(72) Erfinder: TRITSCHLER, Matthias, 79258 Hartheim (DE); MALUS, Peter, 79379 Müllheim (DE); STÖCKLIN, Lutz, 79367 Weisweil (DE); KOCH, Guido, 79149 Karlsruhe (DE)
(74) Vertreter: Mertzlufft-Paufler, Cornelius
(86) Internationale Anmeldenummer: PCT/EP2021/062053
(87) Internationale Veröffentlichungsnummer: WO 2021/224415

(56) Entgegenhaltungen:
- WO-A1-01/90621
- WO-A1-2011/037287
- DE-A1-102014 010 182
- US-A- 4 248 104
- US-A1- 2003 145 667
- US-B1- 6 231 027
- US-B1- 6 572 076

## Beschreibung

Die Erfindung betrifft Fail-Safe-Antriebe und einen Stellantrieb mit einem Fail-Safe-Antrieb.

Aus der US 4 248 104 A ist ein nockengetriebener Feder-Rückholmechanismus in Verbindung mit einem Stellglied für ein Steuerelement, beispielsweise ein Ventil, vorbekannt.

Aus der US 6 572 076 B1 ist ein Ventilstellglied vorbekannt, das ein Gehäuse, ein Betätigungsteil, das sich teilweise in dem Gehäuse befindet und auf das Gehäuse bezogen beweglich ist, Antriebsmittel, die angeordnet sind, um das Betätigungsteil zwischen einer ersten und einer zweiten Position anzutreiben, um ein Ventil zwischen einer ersten und einer zweiten Lage zu rekonfigurieren, erregbare, federnde Mittel innerhalb des Gehäuses, Verriegelungsmittel zum Verriegeln der federnden Mittel in einem erregbaren Zustand zu verriegeln, wobei es die Verriegelungsmittel den Antriebsmitteln ermöglichen, das Betätigungsteil von beiden seiner Positionen zu einer anderen Position anzutreiben, ohne die federnden Mittel im Wesentlichen zu erregen oder zu entregen, wenn die federnden Mittel von den Verriegelungsmitteln verriegelt werden, Entriegelungsmittel, um die federnden Mittel von den Verriegelungsmitteln zu entriegeln, um zu veranlassen, dass das Betätigungsteil unter dem Einfluss der Entregung der federnden Mittel zu einer seiner Positionen bewegt wird und dadurch das Ventil von einer Lage zur anderen Lage zu rekonfigurieren, und Belastungsübertragungsmittel beinhaltet, die innerhalb des Gehäuses verschiebbar befestigt und bezogen auf das Gehäuse durch die federnden Mittel vorgespannt sind.

Aus der US2003/145667A1 ist ein Linearstellglied vorbekannt. Das Linearstellglied umfasst einen Motor zur Erzeugung einer Drehbewegung, eine Einrichtung zur Erzeugung einer Linearbewegung, die mit dem Motor zum Umwandeln der Drehbewegung in eine Linearbewegung gekoppelt ist und die eine Gewindewellen- und Mutter-Anordnung aufweist, ein angetriebenes Element, das durch die Einrichtung zur Erzeugung einer Linearbewegung zwischen einer ersten Position und einer zweiten Position linear beweglich ist und das mit einem Element der Wellen- und Mutteranordnung gekoppelt ist, und eine Rückstelleinrichtung zum Zurückführen des angetriebenen Elements in die erste Position im Falle einer Störung.

Aus der WO 01/90621 A1 ist eine Dämpfungseinrichtung für einen Sicherheitsantrieb eines Stellantriebs für eine Armatur oder dergleichen Stellglied vorbekannt. Der Sicherheitsantrieb ist in einem Störfall, bei einem Energieausfall, zur Stellung des Stellgliedes in eine vorgegebene Sicherheitsstellung unter Dämpfung durch die Dämpfungseinrichtung aktivierbar. Die Dämpfungseinrichtung weist einen Energiewandler auf und ist dadurch gekennzeichnet, dass der Energiewandler einen mit dem Sicherheitsantrieb verbundenen elektrischen Generator zur Umwandlung von Bewegungsenergie in elektrische Energie und eine mit dem Generator verbundene elektrische Last aufweist.

Weitere Fail-Safe-Antriebe der eingangs genannten Art sind aus den Druckschriften WO 2011/037 287 A1 und EP 1 035 307 A1 vorbekannt.

US 6 231 027 B1 offenbart einen Fail-Safe-Antrieb nach dem Oberbegriff des Anspruchs 1.

Fail-Safe-Antriebe können dazu verwendet werden, eine Armatur, beispielsweise ein Ventil oder einen Kugelhahn, oder auch ein Maschinenteil außerhalb des regulären Betriebs in eine definierte Position zu verstellen, wenn beispielsweise eine Energieversorgung eines Stellantriebs ausfällt, mit dessen

Antriebsmotor die Armatur oder das Maschinenteil im Regelfall betätigt wird.

Fail-Safe-Antriebe werden oftmals auch als Fail-Safe-Einheiten bezeichnet und sind bisher parallelgeschaltet zu den im Regelfall verwendeten Antriebsmotoren der Stellantriebe angeordnet. Je nach Anwendungsfall können also beispielsweise die Armatur oder das Maschinenteilwahlweise mit dem Antriebsmotor oder dem Fail-Safe-Antrieb betätigt werden. Hierbei hat es sich herausgestellt, dass diese Umlaufgetriebe einen ungünstigen Wirkungsgrad aufweisen, insbesondere wenn sie rückwärts zum Spannen eines mechanischen Antriebsenergiespeichers des Fail-Safe-Antriebs benutzt werden sollen. Daher weisen die bisherigen Lösungen häufig einen zusätzlichen Motor auf, der dem Fail-Safe-Antrieb zugeordnet ist.

Aufgabe der Erfindung ist es insbesondere, einen Fail-Safe-Antrieb und einen Stellantrieb bereitzustellen, die einen einfacheren Aufbau haben.

Zur Lösung der Aufgabe wird zunächst ein Fail-Safe-Antrieb mit den Merkmalen des unabhängigen, auf einen derartigen

Fail-Safe-Antrieb gerichteten Anspruchs vorgeschlagen. Insbesondere wird zur Lösung der Aufgabe somit ein Fail-Safe-Antrieb für einen Stellantrieb vorgeschlagen, der einen Antriebsenergiespeicher aufweist, der zumindest eine Tellerfeder umfasst.

Die Tellerfeder des Antriebsenergiespeichers kann vergleichsweise einfach mit einem Antriebsmotor eines Stellantriebs gespannt werden, der mit dem Fail-Safe-Antrieb ausgestattet ist. Ferner ist es durch die Verwendung zumindest einer Tellerfeder im Antriebsenergiespeicher des Fail-Safe-Antriebs möglich, diesen vergleichsweise kompakt zu bauen. So kann der Fail-Safe-Antrieb vergleichsweise einfach auch in ein kompaktes Gehäuse eines Stellantriebs integriert werden. Gemäß dem unabhängigen Anspruch 1 ist insbesondere vorgesehen, dass der Fail-Safe-Antrieb eine Kurvenscheibe, zumindest ein Rückstellelement, insbesondere eine Rückstellfeder, ein Gegenelement und eine Abtriebswelle aufweist, wobei die Kurvenscheibe und das Gegenelement zur gemeinsamen Umwandlung einer Axialbewegung des Rückstellelements in eine Drehbewegung der Abtriebswelle eingerichtet sind, wobei sich das Rückstellelement längs einer durch die Abtriebswelle definierten axialen Richtung bewegt. Die Axialbewegung kann sich beispielsweise aus einer Entspannung des Rückstellelements ergeben.

Als zumindest ein Rückstellelement des Fail-Safe-Antriebs kann beispielsweise eine Rückstellfeder, insbesondere die zuvor bereits erwähnte wenigstens eine Tellerfeder oder eine Schraubenfeder, vorgesehen sein.

Bei einer Ausführungsform des Fail-Safe-Antriebs ist vorgesehen, dass das Gegenelement durch eine von dem Rückstellelement verursachte Axialbewegung der Kurvenscheibe drehbar ist, und die Abtriebswelle des Fail-Safe-Antriebs durch die Drehbewegung des Gegenelements drehbar ist. Bei dieser Ausführungsform kann das Gegenelement drehfest zumindest mittelbar mit der Abtriebswelle des Fail-Safe-Antriebs verbunden sein.

Bei einer anderen Ausführungsform des Fail-Safe-Antriebs ist vorgesehen, dass die Kurvenscheibe durch eine von dem Rückstellelement verursachte Axialbewegung des Gegenelements drehbar ist, und die Abtriebswelle durch die so erzeugte Drehbewegung der Kurvenscheibe drehbar ist. Bei dieser Ausführungsform kann die Kurvenscheibe drehfest zumindest mittelbar mit der Abtriebswelle des Fail-Safe-Antriebs verbunden sein.

Bei einer Ausführungsform des Fail-Safe-Antriebs, kann die Kurvenscheibe durch zumindest eine Tellerfeder des Antriebsenergiespeichers axial verschieblich sein. Der Kurvenscheibe kann das Gegenelement des Fail-Safe-Antriebs zugeordnet sein, das zumindest mittelbar mit einer eintreibenden Welle und beispielsweise weiter mit einer Abtriebswelle eines Stellantriebs verbindbar oder verbunden ist. Die Verbindung zwischen der eintreibenden Welle und dem Gegenelement kann vorzugsweise lösbar sein, um eine relative Drehung des Gegenelements zu der eintreibenden Welle zu erlauben. Zum Lösen dieser Verbindung kann eine weiter unten noch näher erläuterte Arretiervorrichtung des Fail-Safe-Antriebs verwendet werden. So ist es möglich, das Gegenelement im Bedarfsfall von der eintreibenden Welle abzukoppeln und mithilfe des Fail-Safe-Antriebs zu betätigen, wenn die Abtriebswelle in eine vorgesehene Stellung gebracht werden soll, falls der Antriebsmotor des Stellantriebs, beispielsweise bei Stromausfall, nicht genutzt werden kann.

Bei einer anderen Ausführungsform des Fail-Safe-Antriebs ist das Gegenelement durch eine axiale Bewegung der zumindest einen Tellerfeder axial verschieblich. Dem Gegenelement ist dann die Kurvenscheibe zugeordnet, das bei diesem Ausführungsbeispiel dann zumindest mittelbar mit einer eintreibenden Welle und beispielsweise weiter mit einer Abtriebswelle eines Stellantriebs verbindbar oder verbunden ist. Die Verbindung zwischen der eintreibenden Welle und der Kurvenscheibe kann vorzugsweise lösbar sein, um eine relative Drehung der Kurvenscheibe zu der eintreibenden Welle zu erlauben. Zum Lösen dieser Verbindung kann wiederum die weiter unten noch näher erläuterte Arretiervorrichtung des Fail-Safe-Antriebs verwendet werden.

Die Kurvenscheibe weist erfindungsgemäß zumindest eine Steuerkurve auf, uu, deren Verlauf derart auf eine Federkennlinie des zumindest einen Rückstellelements, insbesondere der zumindest einen Tellerfeder, abgestimmt ist, dass bei Aktivierung des Fail-Safe-Antriebs ein konstantes Abtriebsdrehmoment erzeugbar ist.

Bei einer Ausführungsform des Fail-Safe-Antriebs ist vorgesehen, zumindest eine Tellerfeder zu verwenden, die eine nichtlineare Federkennlinie aufweist. In diesem Fall kann der Fail-Safe-Antrieb eine Kurvenscheibe aufweisen, mit der die nichtlineare Federkennlinie der zumindest einen Tellerfeder derart kompensiert werden kann, dass trotz der nichtlinearen Federkennlinie der zumindest einen Tellerfeder die zuvor erwähnte konstante Abtriebsbewegung und/oder das zuvor erwähnte konstante Abtriebsdrehmoment erzeugt werden kann. Durch ein Zusammenspiel zwischen der entsprechend ausgebildeten Kurvenscheibe und der zumindest einen Tellerfeder des Antriebsenergiespeichers des Fail-Safe-Antriebs kann ein konstantes Abtriebsmoment erzielt werden, das mit dem Fail-Safe-Antrieb auf ein Stellglied, beispielsweise eine Armatur und/oder ein Ventil übertragen Um auch bei vergleichsweise geringem Bauraum ausreichend Antriebsenergie bereitstellen zu können, ist es vorteilhaft, wenn der Antriebsenergiespeicher des Fail-Safe-Antriebs zumindest zwei, vorzugsweise mehrere, gestapelt angeordnete Tellerfedern, insbesondere mit nicht-linearer Federkennlinie umfasst. Dabei können die Tellerfedern gegensinnig gestapelt sein, sodass sich ein ausreichend großer Hub mit ihnen erzielen lässt, um die axial verschiebliche Kurvenscheibe zur Betätigung des Gegenelements zu verstellen.

Durch die Verwendung zumindest zweier, vorzugsweise mehrerer geschichteter Tellerfedern lässt sich eine vergleichsweise hohe Energiedichte im Antriebsenergiespeicher bereitstellen, was eine kompakte Bauweise des Antriebsenergiespeichers und damit des gesamten Fail-Safe-Antriebs begünstigt. Auf diese Weise kann der Fail-Safe-Antrieb vergleichsweise einfach auch in ein kompaktes Gehäuse eines Stellantriebs integriert werden.

Die Kurvenscheibe kann als Globoid-Kurvenscheibe ausgebildet sein.

Die Kurvenscheibe kann zumindest zwei, insbesondere drei oder mehr, vorzugweise gleichmäßig um eine Rotationssachse der Kurvenscheibe verteilt angeordnete Steuerkurven aufweisen. Auf diese Weise ist es möglich, das bereits zuvor erwähnte Gegenelement des Fail-Safe-Antriebs gleichmäßig durch die Kurvenscheibe zu beaufschlagen und die axiale Bewegung der Kurvenscheibe, die mit der zumindest einen Tellerfeder des Antriebsenergiespeichers verursacht wird, gleichmäßig auf das Gegenelement, insbesondere auf die Abtriebsscheibe, des Stellantriebs zu übertragen und in eine Drehbewegung des Gegenelements umzuwandeln.

Bei einer Ausführungsform des Fail-Safe-Antriebs ist vorgesehen, dass das Gegenelement, insbesondere die Abtriebsscheibe, zumindest eine Abtriebsrolle aufweist. Diese mindestens eine Abtriebsrolle kann hierbei auf der Kurvenscheibe abrollen, um die erwähnte Bewegungsumwandlung zu vollziehen. Vorzugsweise verfügt das Gegenelement über eine Anzahl von Abtriebsrollen, die einer Anzahl von Steuerkurven der Kurvenscheibe entspricht. So kann jeder Steuerkurve der Kurvenscheibe jeweils eine Abtriebsrolle des Gegenelements zugeordnet sein. Die mehreren Abtriebsrollen können hierbei gleichmäßig um eine Rotationssachse des Gegenelements verteilt angeordnet sein. Ferner ist es möglich, die zumindest eine Abtriebsrolle in Gebrauchsstellung entlang einer ihr zugeordneten Steuerkurve der Kurvenscheibe zu führen.

Um die Stellposition der Abtriebswelle des Fail-Safe-Antriebs leicht prüfen zu können, kann der Fail-Safe-Antrieb eine Stellanzeige für seine Abtriebswelle aufweisen. Die Stellanzeige kann eine erste, insbesondere gekrümmte, Zahnstange umfassen, die zumindest mittelbar, beispielsweise über das Gegenelement oder die Kurvenscheibe, mit der Abtriebswelle des Fail-Safe-Antriebs verbunden sein kann. Mit dieser ersten Zahnstange kann eine Bewegung der Abtriebswelle zumindest mittelbar auf ein Anzeigeelement der Stellanzeige übertragen werden.

Die Stellanzeige kann zur Übertragung der Bewegung der Abtriebswelle auf das Anzeigeelement eine zweite Zahnstange aufweisen, die ihrerseits mit dem zuvor erwähnten Anzeigeelement verbunden ist. Über eine Übertragungswelle, die für jede Zahnstange ein Ritzel aufweisen kann, lässt sich die Bewegung der ersten Zahnstange auf die zweite Zahnstange und von dort auf das Anzeigeelement übertragen. Das Anzeigeelement kann durch die Bewegung der Abtriebswelle in ein Sichtfenster eines Gehäuses bewegt werden, wodurch sich die Stellung der Abtriebswelle von außen ablesen lässt.

Bei einer Ausführungsform des Fail-Safe-Antriebs ist vorgesehen, dass die Abtriebswelle des Fail-Safe-Antriebs, beispielsweise über das Gegenelement oder die Kurvenscheibe, zumindest mittelbar mit einem Bewegungsdämpfer gekoppelt ist. Der Bewegungsdämpfer kann Teil des Fail-Safe-Antriebs sein.

Mithilfe des Bewegungsdämpfers ist es möglich, die im Notfall durch den Fail-Safe-Antrieb erzeugte Stellbewegung zu dämpfen und so Beschädigungen an dem Fail-Safe-Antrieb, an dem mit dem Fail-Safe-Antrieb ausgestatteten Stellantrieb und/oder an der mit dem Stellantrieb zu betätigenden Armatur und/oder an dem mit dem Stellantrieb zu betätigenden Maschinenteil zu vermeiden.

Ferner kann der Bewegungsdämpfer mit dem Gegenelement, insbesondere mit der Abtriebsscheibe, gekoppelt sein, um die von dem Antriebsenergiespeicher zumindest mittelbar verursachte Bewegung des Gegenelements zu dämpfen.

Der Bewegungsdämpfer kann eine Flüssigkeitskammer und zumindest ein darin bewegliches Verdrängerelement, beispielsweise einen Verdrängerflügel, umfassen. Die Flüssigkeitskammer kann beispielsweise mit Öl befüllt sein. Das Verdrängerelement kann zumindest mittelbar mit der Abtriebswelle, beispielsweise über das Gegenelement oder die Kurvenscheibe, verbunden oder verbindbar sein. Werden das Gegenelement oder die Kurvenscheibe zumindest mittelbar mithilfe des Antriebsenergiespeichers des Fail-Safe-Antriebs in Bewegung versetzt, wird die Bewegung des Gegenelements oder der Kurvenscheibe auch auf das Verdrängerelement übertragen. Dadurch, dass das Verdrängerelement innerhalb der Flüssigkeitskammer bewegbar ist, wird die Bewegung des Verdrängerelements durch die innerhalb der Flüssigkeitskammer enthaltene Flüssigkeit, insbesondere das Öl, gedämpft, gebremst und/oder verzögert, so dass letztendlich auch die Bewegung des mit dem Verdrängerelements verbundenen Gegenelements oder der Kurvenscheibe des Fail-Safe-Antriebs und damit letztendlich auch die Bewegung der Abtriebswelle gedämpft werden kann.

Vorteilhaft ist es, wenn ein Dämpfungsgrad des Bewegungsdämpfers einstellbar ist. Dies kann beispielsweise mithilfe zumindest eines Stromreglers des Bewegungsdämpfers geschehen.

Der Bewegungsdämpfer kann entlang eines Verstellweges des Verdrängerelements unterschiedliche Dämpfungsgrade bereitstellen. So ist es möglich, dass der Bewegungsdämpfers kurz bevor das Verdrängerelement seine Endposition erreicht hat, einen höheren Dämpfungsgrad bereitstellt und so eine höhere Dämpfungswirkung auf das mit ihm zumindest mittelbar verbundene Gegenelement des Fail-Safe-Antriebs bewirkt.

Die unterschiedlichen Dämpfungsgrade können beispielsweise von unterschiedlichen Stromreglern des Bewegungsdämpfers bereitgestellt werden.

Ein Dämpfungsgrad kann im Bereich einer Endlage des Verdrängerelements auf seinem Verstellweg durch die Flüssigkeitskammer größer als ein Dämpfungsgrad in einem Bereich des Verstellwegs des Verdrängerelement zwischen seinen Endlagen sein. Auf diese Weise wird eine mit dem Fail-Safe-Antrieb bedienbare Armatur und/oder ein mit dem Fail-Safe-Anrieb bedienbares Maschinenteil vor Schlägen und/oder Stößen bei Erreichen der Endlage des Stellantriebs geschützt. So können Beschädigungen der Armatur und/oder des Maschinenteils verhindert werden.

Der Fail-Safe-Antrieb kann eine Arretiervorrichtung aufweisen. Mit Hilfe der Arretiervorrichtung kann eine, beispielsweise die bereits zuvor erwähnte zumindest eine Tellerfeder des Antriebsenergiespeichers gespannt gehalten werden. Mithilfe der Arretiervorrichtung kann es ferner möglich sein, das Gegenelement oder die Kurvenscheibe des Fail-Safe-Antriebs relativ zu einer, beispielsweise der bereits zuvor erwähnten, eintreibenden Welle zu fixieren, insbesondere zu drehfixieren. Ferner ist es möglich, das Gegenelement und die Kurvenscheibe des Fail-Safe-Antriebs mithilfe der Arretiervorrichtung relativ zueinander zu fixieren, insbesondere zu drehfixieren.

Die Arretiervorrichtung kann einen Kniehebelmechanismus aufweisen. Sie wird dann ausgelöst, wenn der Fail-Safe-Antrieb betätigt wird.

Die Arretiervorrichtung kann beispielsweise ein Arretiermittel umfassen, das mit einem Rückstellmittel, insbesondere mit einer Rückstellfeder, in einer Ausgangsstellung nahe einer Arretierstellung haltbar ist. Ferner ist es möglich, dass die Arretiervorrichtung einen Haftmagnet umfasst, mit dem das Arretiermittel, insbesondere entgegen einer Rückstellkraft des Rückstellmittels, in seine Arretierstellung bringbar und/oder in dieser haltbar ist.

Mit dem Rückstellmittel kann das Arretiermittel in seiner Ausgangsposition nahe der Arretierstellung gehalten werden. Die übrige Verstellbewegung, um den übrigen Weg des Arretiermittels in seiner Arretierstellung zu überbrücken, wird dann mithilfe des zuvor erwähnten Haftmagneten bewirkt. Der Haftmagnet kann eine vergleichsweise geringe Leistungsaufnahme aufweisen, was seine energieeffiziente Verwendung begünstigt.

Um die Funktionstüchtigkeit des Fail-Safe-Antriebs von Zeit zu Zeit testen zu können, kann der Fail-Safe-Antrieb einen Test-Anschlag aufweisen. Der Test-Anschlag kann aus einer Nichtgebrauchsstellung in eine zwischen einer Spannstellung und einer Entspannungsstellung der zumindest einen Tellerfeder befindlichen Gebrauchsstellung bewegt werden. Auf diese Weise ist es möglich, den Fail-Safe-Antrieb testweise auszulösen, ohne dass sich der gesamte Antriebsenergiespeicher entlädt. Darüber hinaus kann vermieden werden, dass der Stellantrieb seine im Normalbetrieb unerwünschte Position, beispielsweise eine Schließposition, einnehmen muss, während die Funktionstüchtigkeit des Fail-Safe-Antriebs geprüft wird. So lässt es sich trotz der Überprüfung des Fail-Safe-Antriebs vermeiden, die mit dem Stellantrieb, der mit dem Fail-Safe-Antrieb ausgestattet ist, ausgerüstete Anlage zu Testzwecken stillzulegen. Mithilfe des Test-Anschlags kann somit ein vollständiges Schließen der mit dem Stellantrieb ausgestatteten Armatur und/oder des mit dem Stellantrieb ausgestatteten Ventils vermieden werden, wenn die Funktion des Fail-Safe-Antriebs getestet werden soll.

Zudem lässt sich ein vollständiges Aufladen, insbesondere Spannen, des Antriebsenergiespeichers nach Durchführung des zuvor erwähnten Probelaufes vermeiden.

Der zuvor erwähnte Testanschlag kann vorzugsweise elektromechanisch zwischen seiner Nichtgebrauchsstellung und seiner zuvor erläuterten Gebrauchsstellung bewegbar sein.

Bei einer anderen Ausführungsform ist vorgesehen, dass der Fail-Safe-Antrieb einen Test-Anschlag aufweist, der aus einer Nichtgebrauchsstellung in eine Gebrauchsstellung bewegbar ist, die zwischen zwei Endstellungen des Gegenelements angeordnet ist. Der Test-Anschlag kann hierbei eine Drehbegrenzung des Gegenelements bereitstellen. Durch diese Drehbegrenzung kann ein vollständiges Entladen des Antriebsenergiespeichers ebenfalls vermieden werden, wenn der Fail-Safe-Antrieb nur zu Testzwecken ausgelöst werden soll. Auch bei dieser Ausführungsform kann der Test-Anschlag elektromechanisch zwischen seiner Nichtgebrauchsstellung und seiner Gebrauchsstellung bewegt werden.

Bei einer anderen Ausführungsform ist vorgesehen, dass der Fail-Safe-Antrieb einen Test-Anschlag aufweist, der aus einer Nichtgebrauchsstellung in eine Gebrauchsstellung bewegbar ist, die zwischen zwei Endstellungen der Kurvenscheibe angeordnet ist. Der Test-Anschlag kann eine Drehbegrenzung der Kurvenscheibe bereitstellen, wenn die Kurvenscheibe beispielsweise durch eine Axialverschiebung des Gegenelements in Rotation versetzt wird. Durch diese Drehbegrenzung kann ein vollständiges Entladen des Antriebsenergiespeichers ebenfalls vermieden werden, wenn der Fail-Safe-Antrieb nur zu Testzwecken ausgelöst werden soll. Auch bei dieser Ausführungsform kann der Test-Anschlag elektromechanisch zwischen seiner Nichtgebrauchsstellung und seiner Gebrauchsstellung bewegt werden.

Bei einer Ausführungsform des Fail-Safe-Antriebs ist vorgesehen, dass der Testanschlag mit zumindest einem Schalter, insbesondere mit zumindest einem Mikrotaster ausgestattet ist. Mithilfe des zumindest einen Schalters kann die Funktion und/oder auch die Position des Testanschlages überwacht werden. Vorzugsweise ist jeder Endposition des Testanschlags jeweils ein Schalter, insbesondere ein Mikrotaster, zugeordnet. So lässt sich feststellen, in welcher Position sich der Testanschlag jeweils befindet.

Bei einer Ausführungsform ist vorgesehen, dass die Kurvenscheibe des Fail-Safe-Antriebs längsverschieblich auf einer Trägerwelle gelagert ist. Dazu können die Kurvenscheibe und die Trägerwelle korrespondierend zueinander ausgebildete Führungsmittel aufweisen. Ferner ist es möglich, dass die Kurvenscheibe drehfest mit der Trägerwelle verbunden ist. Die Trägerwelle kann beispielsweise direkt oder über ein Getriebe, mit der zuvor erwähnten eintreibenden Welle gekoppelt sein.

Bei einer Ausführungsform ist vorgesehen, dass das Gegenelement des Fail-Safe-Antriebs längsverschieblich auf einer Trägerwelle gelagert ist. Dazu können das Gegenelement und die Trägerwelle korrespondierend zueinander ausgebildete Führungsmittel aufweisen. Ferner ist es möglich, dass das Gegenelement drehfest mit der Trägerwelle verbunden ist. Die Trägerwelle kann beispielsweise direkt oder über ein Getriebe, mit der zuvor erwähnten eintreibenden Welle gekoppelt sein.

Zur Lösung der Aufgabe wird auch ein Fail-Safe-Antrieb vorgeschlagen, bei dem zumindest einer seiner Endlagen ein Endlagenschalter, insbesondere ein Mikrotaster, zugeordnet ist. Erfindungsgemäß ist der Endlagenschalter beweglich, besonders bevorzugt gefedert, gelagert. Der Endlagenschalter kann einem, beispielsweise dem zuvor erwähnten Gegenelement des zuvor erwähnten Fail-Safe-Antriebs oder auch einer, beispielsweise der zuvor bereits erwähnten Kurvenscheibe des zuvor erwähnten Fail-Safe-Antriebs zugeordnet sein. Auf diese Weise kann auch der Endlagenschalter des Fail-Safe-Antriebs vor Beschädigungen geschützt werden, die durch seine Betätigung entstehen könnten.

Ferner wird zur Lösung der Aufgabe ein Stellantrieb vorgeschlagen, bei dem zumindest einer Endlage des Stellantriebs ein Endlagenschalter, insbesondere ein Mikrotaster, zugeordnet ist. So lässt sich ein Erreichen der Endlage erfassen. Dabei ist der zumindest eine Endlagenschalter beweglich, besonders bevorzugt gefedert gelagert. Auf diese Weise kann der Endlagenschalter vor Beschädigungen geschützt werden, die durch seine Betätigung entstehen könnten. Der Endlagenschalter kann dabei einem, beispielsweise dem zuvor bereits erwähnten, Gegenelement oder einer Kurvenscheibe eines, beispielsweise des bereits zuvor erwähnten, Fail-Safe-Antriebs zugeordnet sein.

Durch die gefederte Lagerung des Endlagenschalters in einer Halterung des Endlagenschalters kann der Endlagenschalter ausweichen, wenn das Gegenelement oder auch die Kurvenscheibe bedingt durch einen Nachlauf die eigentliche Endlage bis zu einem internen Endanschlag überfährt. Dies, ohne dass der Endlagenschalter durch diesen Nachlauf zerstört wird.

Zur Lösung der Aufgabe wird schließlich auch ein Stellantrieb mit einer Abtriebswelle und mit einem Antriebsmotor, der zur Übertragung eines Drehmoments zumindest mittelbar mit der Abtriebswelle verbunden ist, vorgeschlagen, der einen Fail-Safe-Antrieb nach einem der auf einen solchen gerichteten Ansprüche aufweist. Hierbei kann ein Gegenelement, insbesondere die zuvor bereits erwähnte Abtriebsscheibe, oder auch eine, beispielsweise die zuvor bereits erwähnte Kurvenscheibe des Fail-Safe-Antriebs zumindest mittelbar mit der Abtriebswelle des Stellantriebs verbunden sein.

Um zu verhindern, dass der Fail-Safe-Antrieb die Abtriebswelle des Stellantriebs antreibt, wenn der Antriebsmotor inaktiv und der Fail-Safe-Antrieb aktiv ist, kann es vorteilhaft sein, wenn die Abtriebswelle des Stellantriebs fixierbar ist. Die Fixierung der Abtriebswelle des Stellantriebs kann mittels einer Bremse und/oder mittels eines selbsthemmenden Getriebes, beispielsweise mittels eines selbsthemmenden Schneckengetriebes erfolgen.

Es kann sich somit ergeben, dass der Antriebsenergiespeicher im Normalbetrieb im gespannten Zustand gedreht wird, während er im Fail-Safe-Betrieb drehfest verbleibt und sich axial entspannt.

Um eine manuelle Betätigung des Stellantriebs zu ermöglichen, kann dieser ein Handrad aufweisen.

Die Erfindung wird nachfolgend anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels. Es zeigen:
- Fig. 1: eine geschnittene Seitenansicht eines Fail-Safe-Antriebs,

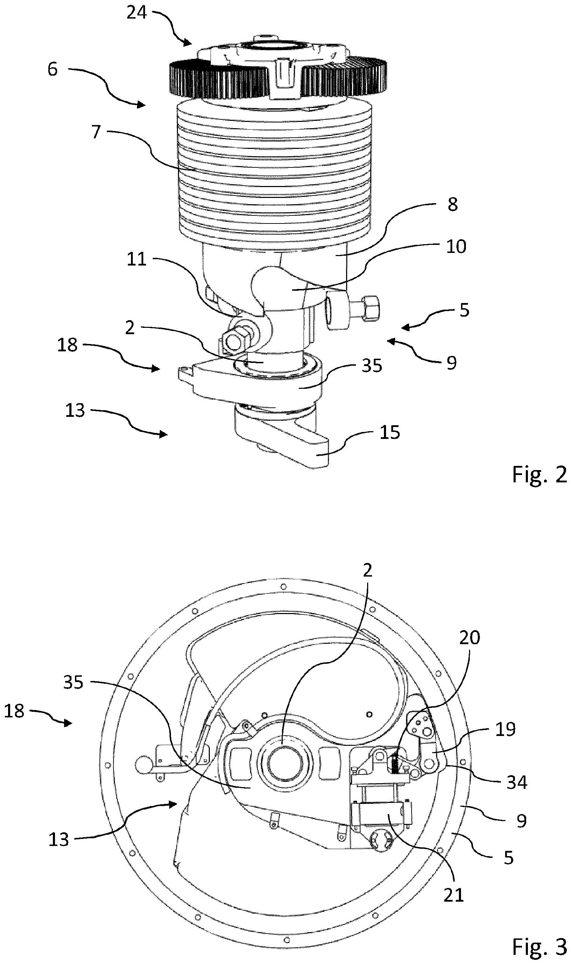

- Fig. 2: eine perspektivische Einzelteildarstellung des Fail-Safe-Antriebs aus Figur 1 ohne Gehäuse, wobei ein Antriebsenergiespeicher mit mehreren, gestapelten Tellerfedern und eine Kurvenscheibe des Fail-Safe-Antriebs zu erkennen sind,
- Fig. 3: ein Querschnitt durch den Fails-Safe-Antrieb aus Figur 1 zur Veranschaulichung einer Arretiervorrichtung des Fail-Safe-Antriebs, mit dem die Tellerfedern des Antriebsenergiespeichers gespannt gehalten werden können,
- Fig. 4: eine perspektivische Baugruppendarstellung des in Figur 1 gezeigten Fail-Safe-Antriebs mit einer Stellanzeige, die dazu eingerichtet ist, eine Stellung seiner Abtriebsscheibe anzuzeigen,
- Fig. 5: ein Querschnitt durch den Fail-Safe-Antrieb aus Figur 1 zur Veranschaulichung eines Bewegungsdämpfers des Fail-Safe-Antriebs, wobei der Querschnitt eine Flüssigkeitskammer und ein Verdrängerelement des Bewegungsdämpfers zeigt,
- Fig. 6: eine teilgeschnittene, perspektivische Ansicht der in Figur 5 gezeigten Flüssigkeitskammer zur Veranschaulichung eines ersten Stromreglers des Bewegungsdämpfers, mit dem eine Bewegung des Verdrängerelements auf seinem Hauptweg gedämpft werden kann,
- Fig. 7: eine teilgeschnittene, perspektivische Ansicht der in den Figuren 5 und 6 gezeigten Flüssigkeitskammer zur Veranschaulichung eines zweiten Stromreglers des Bewegungsdämpfers, mit dem eine Bewegung des Verdrängerelements auf dem letzten Teilstück seines Weges in eine Endlage gedämpft werden kann,
- Fig. 8: eine perspektivische Ansicht des Fail-Safe-Antriebs zur Veranschaulichung zweier gefedert gelagerter Endlagenschalter des Fail-Safe-Antriebs,
- Fig. 9: eine Einzelteildarstellung eines der beiden in Figur 8 gezeigten Endlagenschalters,
- Fig. 10: eine perspektivische Darstellung von Teilen des Fail-Safe-Antriebs zur Veranschaulichung der Kurvenscheibe mit ihren drei Steuerkurven, denen jeweils eine von drei Abtriebsrollen der Abtriebsscheibe des Fail-Safe-Antriebs zugeordnet ist,
- Fig. 11: eine perspektivische Ansicht eines mit dem in den vorherigen Figuren gezeigten Fail-Safe-Antriebs verbundenen Stellantriebs, sowie
- Fig. 12: eine Schnittansicht der in Figur 11 dargestellten Kombination aus Stellantrieb und Fail-Safe-Antrieb.

Sämtliche Figuren zeigen zumindest Teile eines im Ganzen mit 1 bezeichneten Fail-Safe-Antriebs.

Der Fail-Safe-Antrieb 1 weist eine Abtriebswelle 3 und eine eintreibende Welle 4 auf. Zwischen einer Trägerwelle 2 und der eintreibende Welle 4 ist ein Planetengetriebe 24 vorgesehen, das ein Antriebsdrehmoment, das auf die eintreibende Welle 4 einwirkt, umwandelt und auf die Trägerwelle 2 und weiter auf die Abtriebswelle 3 überträgt.

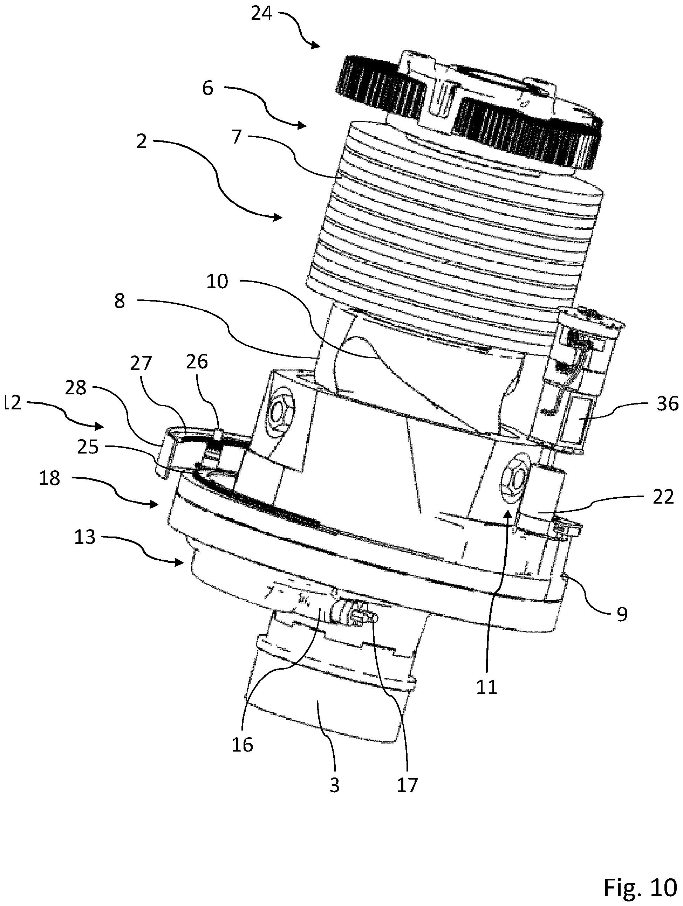

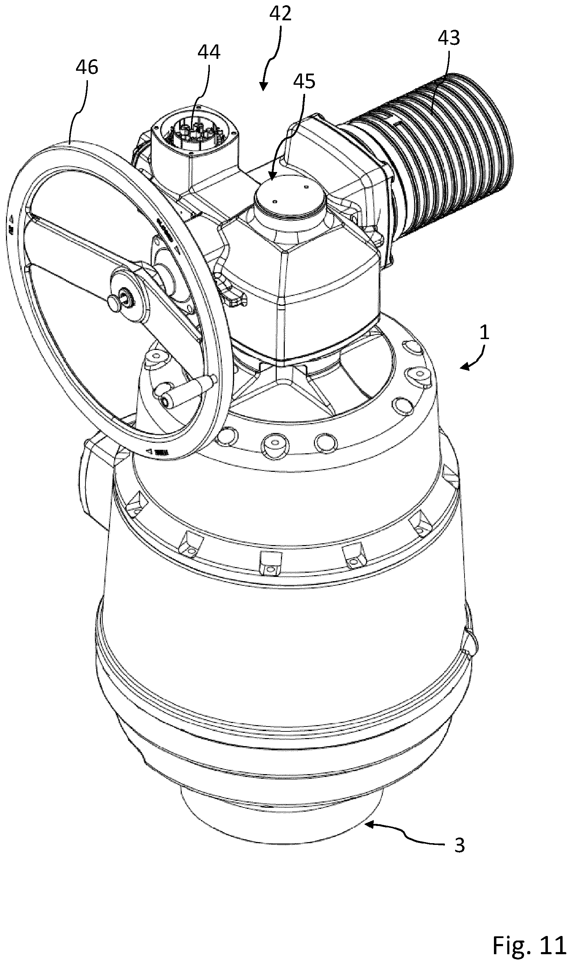

An die eintreibende Welle 4 ist ein in den Figuren 10 und 11 dargestellter Stellantrieb über ein Koppelmittel - hier eine Passfeder - angekoppelt, um die Trägerwelle 2 und weiter die Abtriebswelle 3 im Normalbetrieb anzutreiben. Der Fail-Safe-Antrieb 1 dient dazu, die Abtriebswelle 3 bei Stromausfall zu betätigen und ein mit der Abtriebswelle 3 verbundenes Ventil oder eine Armatur in eine definierte Stellung, vorzugsweise in eine Schließstellung, zu bewegen.

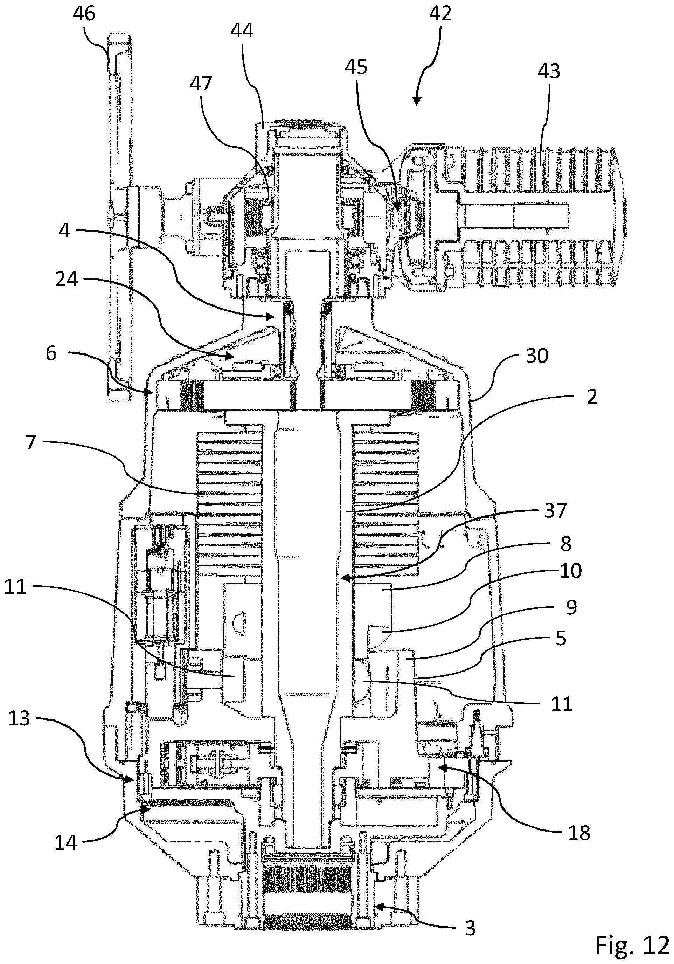

Im Beispiel bildet der Fail-Safe-Antrieb 1 somit eine Fail-Safe-Einheit, die als Modul an einem Stellantrieb 42 nachrüstbar ist. Der Stellantrieb 42 ist in den Figuren 11 und 12 dargestellt und mit der eintreibenden Welle 4 des Fail-Safe-Antriebs 1 verbunden. Bei weiteren Ausführungsbeispielen sind Fail-Safe-Antrieb und Stellantrieb miteinander integriert ausgeführt.

Der Fail-Safe-Antrieb 1 weist ein Gegenelement 5, hier in Form einer Abtriebsscheibe 9 auf, die zumindest mittelbar mit der Abtriebswelle 3 des Fail-Safe-Antriebs 1 verbunden ist.

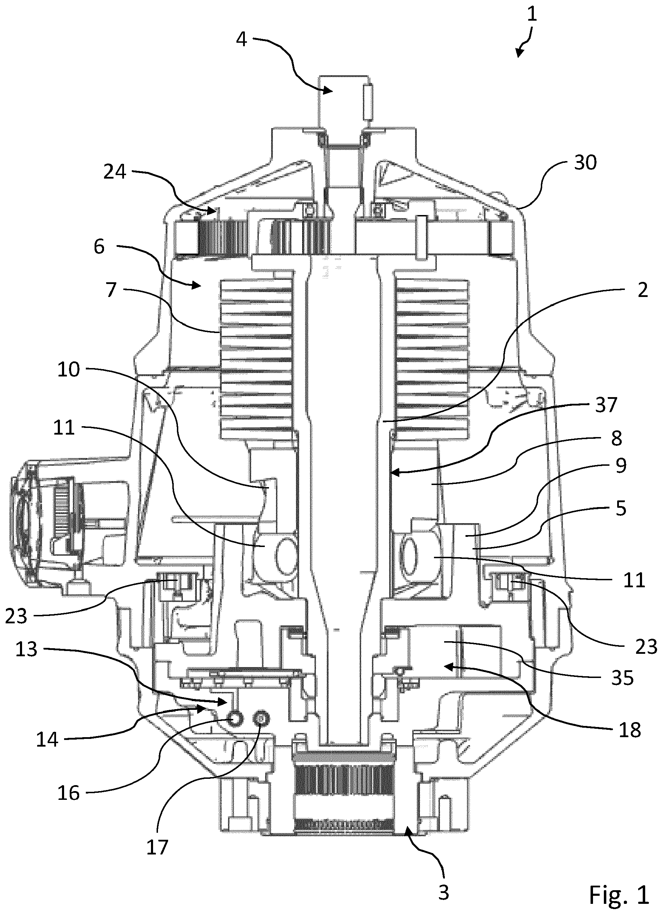

Die Schnittdarstellung aus Figur 1 verdeutlicht, dass der Fail-Safe-Antrieb 1 einen Antriebsenergiespeicher 6 aufweist, der vierzehn Rückstellelemente in Form von Tellerfedern 7 umfasst.

Jede der Tellerfedern 7 hat eine nichtlineare Federkennlinie.

Der Fail-Safe-Antrieb 1 weist ferner eine Kurvenscheibe 8, die mit dem bereits zuvor erwähnten Gegenelement 5, nämlich der Abtriebsscheibe 9 zusammenwirkt. Die Kurvenscheibe 8 ist axial verschieblich an der Trägerwelle 2 angeordnet. Die Kurvenscheibe 8 und das Gegenelement 5 sind zur gemeinsamen Umwandlung einer Axialbewegung der Tellerfedern 7 in eine Drehbewegung der Abtriebswelle 3 des Fail-Safe-Antriebs 1 eingerichtet. Die Axialbewegung der Tellerfedern 7 ist im gezeigten Ausführungsbeispiels eine axiale Entspannungsbewegung der Tellerfedern 7.

Durch die axiale Entspannungsbewegung der Tellerfedern 7 des Antriebsenergiespeichers 6 kann die Kurvenscheibe 8 axial entlang der Trägerwelle 2 verschoben werden, um die zumindest mittelbar mit der Abtriebswelle 3 verbundene Abtriebsscheibe 9 zu betätigen und so die Abtriebswelle 3 in die für den Notfall vorgesehene Stellung zu bewegen, auch wenn der angekoppelte Stellantrieb beispielsweise aufgrund eines Stromausfalls nicht mehr funktioniert. Bei einer anderen Ausführungsform des Fail-Safe-Antriebs 1 ist die kinematische Umkehr des zuvor beschriebenen und im Folgenden noch näher beschriebenen Funktionsprinzips realisiert. Hier wird dann das Gegenelement 5 axial durch die Tellerfedern 7 beaufschlagt und axial verschoben und die Kurvenscheibe 8 in Drehung versetzt, um die Abtriebswelle 3 des Fail-Safe-Antriebs 1 in die für den Notfall vorgesehene Stellung zu bewegen.

Die Kurvenscheibe 8 weist drei gleichmäßig um ihre Rotationssachse verteilt angeordnete Steuerkurven 10 auf. Die Steuerkurven 10 weisen jeweils einen Verlauf auf, der derart auf die nichtlinearen Federkennlinien der Tellerfedern 7 abgestimmt ist, dass bei Aktivierung des Fail-Safe-Antriebs 1 ein konstantes Abtriebsdrehmoment erzeugt wird.

Wie bereits zuvor erwähnt, ist die Kurvenscheibe 8 längsverschieblich auf der Trägerwelle 2 geführt. Dazu weist die Trägerwelle 2 an ihrer Außenseite entsprechende Führungsstrukturen in Form von Nuten und Leisten auf. Entsprechende Gegennuten und Gegenleisten sind an der Kurvenscheibe 8 des Fail-Safe-Antriebs 1 vorgesehen. So ist die Kurvenscheibe 8 längsverschieblich an der Trägerwelle 2 geführt, jedoch drehfest mit dieser verbunden.

Die axial verschiebliche Kurvenscheibe 8 bildet zusammen mit der Abtriebsscheibe 9 eine Art Kurvengetriebe, mit dem die durch die Tellerfedern 7 des Antriebsenergiespeichers 6 hervorgerufene axiale Bewegung der Kurvenscheibe 8 über die Steuerkurven 10 und mit den Steuerkurven 10 jeweils zusammenwirkende Abtriebsrollen 11 auf die Abtriebsscheibe 9 übertragen und in eine Rotationsbewegung der Abtriebsscheibe 9 umgesetzt werden kann.

Die Abtriebsscheibe 9 weist insgesamt drei Abtriebsrollen 11 auf, die gleichmäßig verteilt in einem Winkelabstand von 120° um die Rotationssachse der Abtriebsscheibe 9 angeordnet sind. Somit weist die Abtriebsscheibe 9 eine Anzahl von Abtriebsrolle 11 auf, die einer Anzahl von Steuerkurven 10 der Kurvenscheibe 8 entspricht.

Die Abtriebsrollen 11 sind drehbar gelagert an der Abtriebsscheibe 9 angeordnet und dienen dazu, die Axialbewegung der Kurvenscheibe 8 in eine Rotationsbewegung der Abtriebsscheibe 9 umzusetzen. Bei axialer Verschiebung der Kurvenscheibe 8 rollen die Abtriebsrollen 11 entlang der Steuerkurven und bewirken eine Drehbewegung der Abtriebsscheibe 9 relativ zu der drehfest mit der Trägerwelle 2 verbundenen Kurvenscheibe 8. Die relative Drehung zwischen Kurvenscheibe 8 und Abtriebsscheibe 9 wird durch Aufhebung einer Arretierung zwischen der Trägerwelle 2 und der Abtriebsscheibe 9 möglich.

Die Arretierung wird weiter unter noch beschrieben.

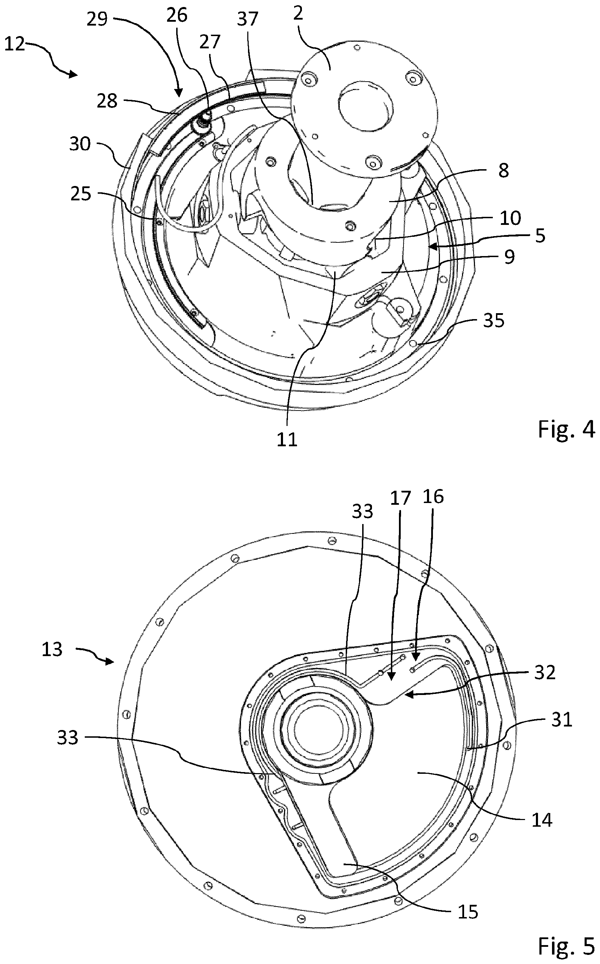

Der Fail-Safe-Antrieb 1 weist ferner eine Stellanzeige 12 für seine Abtriebsscheibe 9 auf. Die Stellanzeige 12 ist in der perspektivischen Darstellung der Figur 4 zu erkennen. Mithilfe einer gekrümmten Zahnstange 25, die mit der Abtriebsscheibe 9 festverbunden ist, wird die Bewegung der Abtriebsscheibe 9 über einen Übertragungswelle 26, die zwei Ritzel aufweist, auf eine zweite Zahnstange 27 übertragen. Die zweite Zahnstange 27 ist mit einem Anzeigeelement 28 verbunden. Das Anzeigeelement 28 kann durch die Bewegung der Abtriebsscheibe 9 in ein Sichtfenster 29 eines Gehäuses 30 bewegt werden, wodurch sich die Stellung der Abtriebsscheibe 9 von außen ablesen lässt.

Das Gegenelement 5 des Fail-Safe-Antriebs 1, also hier die Abtriebsscheibe 9, ist zumindest mittelbar mit einem Bewegungsdämpfer 13 gekoppelt. Der Bewegungsdämpfer 13 ist beispielsweise in Figur 5 dargestellt.

Der Bewegungsdämpfer 13 umfasst eine mit Flüssigkeit, beispielsweise mit Öl befüllte Flüssigkeitskammer 14 und zumindest ein darin bewegliches Verdrängerelement 15. Das Verdrängerelement 15 ist mit der Trägerwelle 2 gekoppelt und dadurch zumindest mittelbar mit dem Gegenelement 5, also der Abtriebsscheibe 9 verbunden.

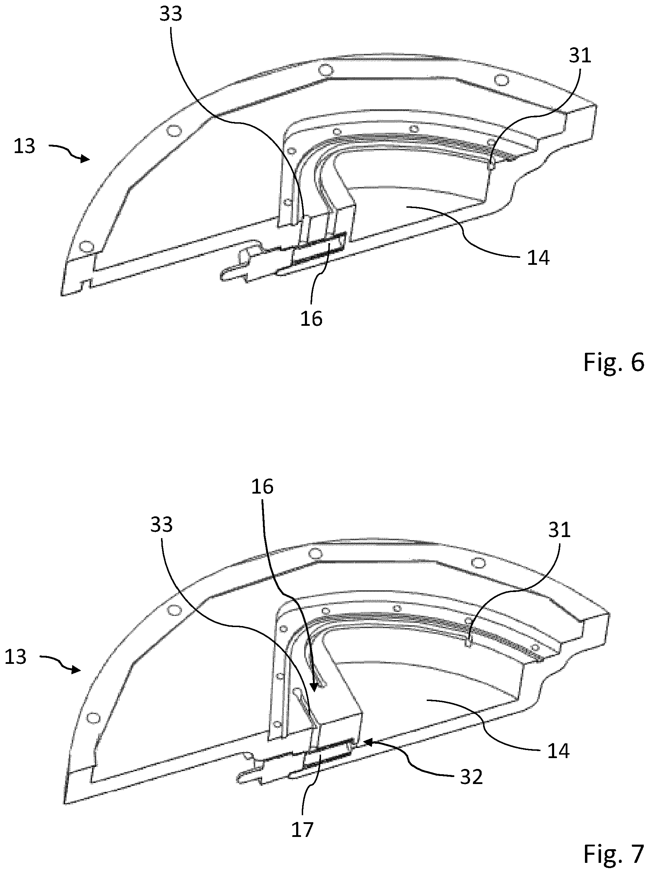

Ein Dämpfungsgrad des Bewegungsdämpfers 13 ist einstellbar. Die Einstellung des Dämpfungsgrades kann mithilfe seiner insgesamt zwei Stromregler 16 und 17 erfolgen, die in den teilgeschnittenen Darstellungen der Figuren 6 und 7 zu erkennen sind.

Mithilfe der beiden Stromregler 16 und 17 ist der Bewegungsdämpfer 13 ferner dazu eingerichtet, entlang eines Verstellwegs des Verdrängerelements 15 durch die Flüssigkeitskammer 14 unterschiedliche Dämpfungsgrade bereitzustellen. Dabei ist vorgesehen, dass der Dämpfungsgrad, der von dem Bewegungsdämpfer 13 bereitgestellt wird, im Bereich einer Endlage des Verdrängerelements 15 auf seinem Verstellweg durch die Flüssigkeitskammer 14 größer als ein Dämpfungsgrad in einem Bereich des Verstellwegs des Verdrängerelements 15 zwischen den Endlagen ist.

Die Figuren 6 und 7 verdeutlichen, dass innerhalb der Flüssigkeitskammer 14 zwei Auslassöffnungen 31 und 32 vorgesehen sind, durch die mithilfe des Verdrängerelements 15 verdrängte Flüssigkeit den beiden Stromreglern 16 und 17 zugeführt werden kann.

Auf seinem Hauptweg verdrängt das Verdrängerelement 15 die Flüssigkeit derart, dass sie durch beide Auslassöffnungen 31 und 32 aus der Flüssigkeitskammer 14 austreten und den beiden Stromreglern 16 und 17 zugeführt werden kann. Sobald das Verdrängerelement 15 die Auslassöffnung 31 für den Hauptweg passiert, kann die mit dem Verdrängerelement 15 verdrängte Flüssigkeit nur noch über die Auslassöffnung 32 für die Endlage aus der Flüssigkeitskammer 14 ausströmen und dem Stromregler 17 für die Endlage zugeführt werden. Dies führt zu einem im Vergleich erhöhten Dämpfungsgrad, so dass der Fail-Safe-Antrieb 1, der Stellantrieb 42 und eine mit dem Stellantrieb 42 zu betätigende Armatur oder ein Maschinenteil zuverlässig vor stoßartigen Belastungen geschützt sind, wenn die Abtriebswelle 3 in ihre Endlage bewegt wird.

Die Auslassöffnungen 31 und 32 sind über entsprechende Kanäle mit den Stromreglern 16 und 17 verbunden. Über einen Rücklaufkanal 33 wird das auf der einen Seite durch die Auslassöffnungen 31 und 32 aus der Flüssigkeitskammer 14 verdrängte Öl der Flüssigkeitskammer 14 wieder zugeführt.

Figur 4 veranschaulicht eine Arretiervorrichtung 18 des Fail-Safe-Antriebs 1. Mithilfe der Arretiervorrichtung 18 können die Tellerfedern 7 des Antriebsenergiespeichers 6 gespannt gehalten werden. Dies geschieht dadurch, dass die Arretiervorrichtung 18 die Abtriebsscheibe 9 relativ zu der Trägerwelle 2 und relativ zu der Kurvenscheibe 8 fixiert, insbesondere drehfixiert, wie es bereits zuvor angedeutet wurde.

Die Arretiervorrichtung 18 weist zu diesem Zweck ein Arretiermittel 19 auf, das mit einem Rückstellmittel 20, hier mit einer Rückstellfeder, nahe einer Arretierstellung gehalten wird. In dieser Stellung verbindet das Arretiermittel 19 die Abtriebsscheibe 9 noch nicht mit der Trägerwelle 2. Ferner umfasst die Arretiervorrichtung 18 auch einen Haftmagnet 21, mit dem das Arretiermittel 19 entgegen der Rückstellkraft des Rückstellmittels 20 in seine Arretierstellung gebracht und gehalten werden kann.

Das Arretiermittel 19 ist ein über einen Kniehebel mit dem Rückstellmittel 20 verbundener Rasthebel, der in seiner Arretierstellung in eine entsprechende Rastausnehmung 34 an der Abtriebsscheibe 9 eingreift und so die Abtriebsscheibe 9 mit der Trägerwelle 2 drehfest verbindet. Die Arretiervorrichtung weist einen Rastträger 35 auf, der drehfest mit der Trägerwelle 2 verbunden ist.

Das Arretiermittel 19 wird bei Stromausfall oder bei einer Notauslösung, also dann, wenn der Haftmagnet 21 nicht mehr aktiviert oder stromlos ist, nicht mehr in seiner Arretierstellung gehalten. Durch das auf die Abtriebsscheibe wirkende Drehmoment wird das Arretiermittel 19 an der Abtriebsscheibe 9 bewegt. Die drehfeste Verbindung, die die Arretiervorrichtung 18 zwischen der Abtriebsscheibe 9 und der Trägerwelle 2 bereitstellt, wird aufgehoben.

Durch die Aufhebung der drehfesten Verbindung wird die Abtriebsscheibe 9 relativ zu der Kurvenscheibe 8 drehbar. So wird der Antriebsenergiespeicher 6 mit seinen gestapelten Tellerfedern 7 wirksam und verschiebt die Kurvenscheibe 8 axial auf der Trägerwelle 2 und bewirkt dabei eine Drehung der Abtriebsscheibe 9, durch die die Abtriebswelle 3 und letztendlich eine mit dieser verbundene Armatur und/oder ein Maschinenteil in die für den Notfall vorgesehene Sollstellung gebracht werden kann. Bei erneuter Aktivierung des Haftmagneten 21 unterstützt das Rückstellmittel 20, dass das Arretiermittel 19 wieder in seine Arretierstellung gebracht werden kann.

Der Fail-Safe-Antrieb 1 weist einen Test-Anschlag 22 auf. Der Test-Anschlag 22 ist in Figur 10 erkennbar und kann aus einer Nichtgebrauchsstellung in eine Gebrauchsstellung bewegt werden. Die Gebrauchsstellung, in die der Test-Anschlag 22 bewegt werden kann, liegt zwischen zwei Endstellungen der Abtriebsscheibe 9, wobei eine Endstellung der Abtriebsscheibe 9 einer Spannstellung und eine zweite Endstellung einer Entspannungsstellung der mehreren Tellerfedern 7 des Antriebsenergiespeicher 6 des Fail-Safe-Antriebs 4 zugeordnet sind. Als Test-Anschlag 22 dient ein Riegelbolzen, der aus seiner in Figur 10 gezeigten Ausgangsstellung in seine Gebrauchsstellung fährt.

Ist der Test-Anschlag 22 elektromechanisch in seine Gebrauchsstellung bewegt, kann die Funktion des Fail-Safe-Antriebs 1 geprüft werden, ohne dass die Abtriebswelle 3 vollständig in ihre für den Notfall vorgesehene Stellung bewegt wird. So wird es möglich, dass die in dem Antriebsenergiespeicher 6 gespeicherte Antriebsenergie nicht vollständig entladen werden muss, wenn der Fail-Safe-Antrieb 1 zu Testzwecken ausgelöst werden soll.

Zur Betätigung des Test-Anschlags 22 ist ein elektromechanischer Aktor 36 vorgesehen, der ebenfalls in Figur 10 zu erkennen ist. Der Aktor 36 bewegt den Test-Anschlag 22 in seine Gebrauchsstellung, wo er einen Drehwinkelbereich begrenzt, innerhalb dessen die Abtriebsscheibe 9 gedreht werden kann.

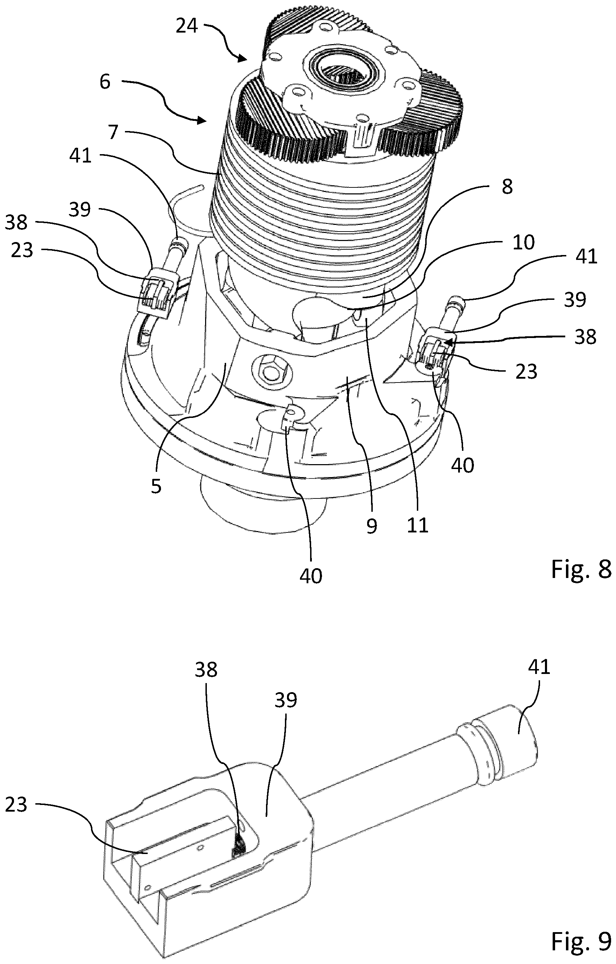

Der Fail-Safe-Antrieb 1 weist insgesamt zwei Endlagenschalter 23 in Form jeweils eines Mikrotasters auf. Die Endlagenschalter 23 sind beispielsweise in den Figuren 8 und 9 dargestellt. Die Endlagenschalter 23 sind mittels einer Federung 38 gefedert in einer Halterung 39 gelagert und in dem Gehäuse 30 des Fail-Safe-Antriebs 1 angeordnet. Die Endlagenschalter 23 sind dem Gegenelement 5 des Fail-Safe-Antriebs 1 zugeordnet. Erreicht das Gegenelement 5 seine Endlage, kontaktiert es einen der Endlagenschalter 23 mit einem seiner beiden Anschläge 40. Die Anschläge 40 sind drehbar gelagert an dem Gegenelement 5, um eine flächige Anlage der Anschläge 40 an den ihnen zugeordneten Endanschlagschaltern 23 zu ermöglichen. Durch die gefederte Lagerung der Endlagenschalter 23 werden die Endlagenschalter 23 vor Beschädigungen geschützt, wenn das Gegenelement 5, hier die Abtriebsscheibe 9, des Fail-Safe-Antriebs 4 die Endlagenschalter 23 beaufschlagt. Jedem Endlagenschalter 23 ist eine Stellschraube 41 zugeordnet. Mithilfe der Stellschrauben 41 können die Positionen der Halterungen 39 und damit auch die Positionen der Endanschlagschalter 23 verändert werden.

Die Figuren 11 und 12 zeigen die Kombination des Stellantriebs 42 mit dem Fail-Safe-Antrieb 1. Der Stellantrieb 42 weist einen Antriebsmotor 43 auf. Der Antriebsmotor 43 steht in Verbindung mit einer Abtriebswelle 45 des Stellantriebs 42. Die Abtriebswelle 45 ist zur Drehmomentübertragung mittels eines Schneckengetriebes 47 mit der eintreibenden Welle 4 des Fail-Safe-Antriebs 1 verbunden. Auf diese Weise ist auch die Abtriebsscheibe 9 des Fail-Safe-Antriebs 1 zumindest mittelbar mit der Abtriebswelle 45 des Stellantriebs 42 verbunden.

Die Abtriebswelle 45 ist fixierbar. Im gezeigten Ausführungsbeispiel erfolgt die Fixierung der Abtriebswelle 45 über das zuvor erwähnte Schneckengetriebe 47, das ein selbsthemmendes Getriebe ist. Auf diese Weise wird verhindert, dass der Antriebsmotor 43 des Stellantriebs 42 durch den aktivierte Fail-Safe-Antrieb 1 gedreht wird. Die Fixierung des Antriebsmotors 43 führt letztendlich dazu, dass die Trägerwelle 2 des Fail-Safe-Antriebs 1 durch den Antriebsmotor 43 Trägerwelle 2 drehfest gehalten wird, wenn der Antriebsmotor 43 stromlos ist.

Der Stellantrieb 42 verfügt über einen Elektroanschluss 44. Über ein Handrad 46 kann der Stellantrieb 42 im Bedarfsfall auch manuell betätigt werden.

Die Erfindung befasst sich mit Verbesserungen auf dem technischen Gebiet der Stellantriebe. Hierzu wird unter anderem ein Fail-Safe-Antrieb 4 für einen Stellantrieb 1 vorgeschlagen, der einen Antriebsenergiespeicher 6 aufweist, der zumindest eine Tellerfeder 7 und/oder eine Kurvenscheibe 8 zur Umwandlung einer axialen Antriebsbewegung eines Rückstellelements in eine rotatorische Antriebsbewegung umfasst.

### Bezugszeichenliste

- 1: Fail-Safe-Antrieb
- 2: Trägerwelle
- 3: Abtriebswelle
- 4: eintreibende Welle
- 5: Gegenelement
- 6: Antriebsenergiespeicher
- 7: Tellerfeder
- 8: Kurvenscheibe
- 9: Abtriebsscheibe
- 10: Steuerkurve
- 11: Abtriebsrolle
- 12: Stellanzeige
- 13: Bewegungsdämpfer
- 14: Flüssigkeitskammer
- 15: Verdrängerelement
- 16: Stromregler für den Hauptweg
- 17: Stromregler für die Endlage
- 18: Arretiervorrichtung
- 19: Arretiermittel
- 20: Rückstellmittel
- 21: Haftmagnet
- 22: Test-Anschlag
- 23: Endlagenschalter
- 24: Planetengetriebe
- 25: erste Zahnstange an 9
- 26: Übertragungswelle
- 27: zweite Zahnstange
- 28: Anzeigeelement
- 29: Sichtfenster
- 30: Gehäuse von 1
- 31: Auslassöffnung für den Hauptweg
- 32: Auslassöffnung für die Endlage
- 33: Rücklaufkanal
- 34: Rastausnehmung
- 35: Rastträger
- 36: elektromechanischer Aktor
- 37: Führungsmittel an 2
- 38: Federung für 23
- 39: Halterung für 23
- 40: Anschlag an 5/9
- 41: Stellschraube für 23
- 42: Stellantrieb
- 43: Antriebsmotor
- 44: Elektroanschluss von 42
- 45: Abtriebswelle von 42
- 46: Handrad
- 47: Schneckengetriebe

## Patentansprüche

1. Fail-Safe-Antrieb (1) für einen Stellantrieb, wobei der Fail-Safe-Antrieb (1) eine Kurvenscheibe (8), zumindest ein Rückstellelement, ein Gegenelement (5) und eine Abtriebswelle (3) aufweist, wobei die Kurvenscheibe (8) und das Gegenelement (5) zur gemeinsamen Umwandlung einer Axialbewegung des Rückstellelements in eine Drehbewegung der Abtriebswelle (3) eingerichtet sind, wobei sich das Rückstellelement längs einer durch die Abtriebswelle definierten axialen Richtung bewegt,
**dadurch gekennzeichnet, dass** die Kurvenscheibe (8) zumindest eine Steuerkurve (10) aufweist, deren Verlauf derart auf eine Federkennlinie des zumindest einen Rückstellelements abgestimmt ist, dass bei Aktivierung des Fail-Safe-Antriebs (1) ein konstantes Abtriebsdrehmoment erzeugbar ist.

2. Fail-Safe-Antrieb (1) nach Anspruch 1, wobei der Fail-Safe-Antrieb (1) als zumindest ein Rückstellelement eine Rückstellfeder, bevorzugt zumindest eine Tellerfeder (7), und/oder einen Antriebsenergiespeicher (6) aufweist, der zumindest eine Tellerfeder (7), insbesondere mit nichtlinearer Federkennlinie, umfasst.

3. Fail-Safe-Antrieb (1) nach Anspruch 1 oder 2, wobei das Gegenelement (5) durch eine von dem Rückstellelement verursachte Axialbewegung der Kurvenscheibe (8) drehbar ist, und wobei die Abtriebswelle (3) durch die Drehbewegung des Gegenelements (5) drehbar ist, oder wobei die Kurvenscheibe (8) durch eine von dem Rückstellelement verursachte Axialbewegung des Gegenelements (5) drehbar ist, und wobei die Abtriebswelle (3) durch die Drehbewegung der Kurvenscheibe (8) drehbar ist.

4. Fail-Safe-Antrieb (1) nach einem der vorherigen Ansprüche, wobei das Gegenelement (5) oder die Kurvenscheibe (8) eine Abtriebsscheibe (9) ist und/oder wobei das Gegenelement (5) oder die Kurvenscheibe (8) zumindest mittelbar mit einer eintreibenden Welle (4) verbindbar oder verbunden ist, vorzugsweise wobei eine Verbindung zwischen dem Gegenelement (5) oder der Kurvenscheibe (8) und der eintreibenden Welle (4) lösbar ist.

5. Fail-Safe-Antrieb (1) nach einem der Ansprüche 1 bis 4, wobei die Kurvenscheibe (8) zumindest eine Steuerkurve (10) aufweist, deren Verlauf derart auf eine nicht lineare Federkennlinie des zumindest einen Rückstellelements, insbesondere der zumindest einen Tellerfeder (7), abgestimmt ist, dass bei Aktivierung des Fail-Safe-Antriebs (1) ein konstantes Abtriebsdrehmoment erzeugbar ist.

6. Fail-Safe-Antrieb (1) nach einem der Ansprüche 1 bis 5, wobei die Kurvenscheibe (8) eine Globoid-Kurvenscheibe ist.

7. Fail-Safe-Antrieb (1) nach einem der vorherigen Ansprüche, wobei der Antriebsenergiespeicher (6) zumindest zwei, vorzugsweise mehrere, geschichtete Tellerfedern (7), insbesondere mit nichtlinearer Federkennlinie, umfasst.

8. Fail-Safe-Antrieb (1) nach einem der vorherigen Ansprüche, wobei die Kurvenscheibe (8) zumindest zwei, insbesondere drei oder mehr, vorzugsweise gleichmäßig um eine Rotationsachse der Kurvenscheibe (8) verteilt angeordnete Steuerkurven (10) aufweist.

9. Fail-Safe-Antrieb (1) nach einem der vorherigen Ansprüche, wobei das Gegenelement (5), insbesondere die Abtriebsscheibe (9), zumindest eine Abtriebsrolle (11) aufweist, insbesondere eine Anzahl von Abtriebsrollen (11) umfasst, die einer Anzahl von Steuerkurven (10) der Kurvenscheibe (8) entspricht, insbesondere wobei die Abtriebsrollen (11) gleichmäßig um eine Rotationsachse des Gegenelements (5) verteilt angeordnet sind, und/oder wobei die zumindest eine Abtriebsrolle (11) in Gebrauchsstellung entlang einer ihr zugeordneten Steuerkurve (10) der Kurvenscheibe (8) geführt ist.

10. Fail-Safe-Antrieb (1) nach einem der vorherigen Ansprüche mit einer Stellanzeige (12) zur Anzeige einer Stellung seiner Abtriebswelle (3).

11. Fail-Safe-Antrieb (1) nach einem der vorherigen Ansprüche, wobei die Abtriebswelle (3), beispielsweise über das Gegenelement (5) oder die Kurvenscheibe (8), zumindest mittelbar mit einem Bewegungsdämpfer (13) gekoppelt ist.

12. Fail-Safe-Antrieb (1) nach dem vorherigen Anspruch, wobei der Bewegungsdämpfer (13) eine, insbesondere mit Öl befüllte, Flüssigkeitskammer (14) und zumindest ein darin bewegliches Verdrängerelement (15) umfasst, wobei das Verdrängerelement (15) zumindest mittelbar mit der Abtriebswelle (3), verbunden oder verbindbar ist, beispielsweise über das Gegenelement (5) oder die Kurvenscheibe (8).

13. Fail-Safe-Antrieb (1) nach Anspruch 11 oder 12, wobei ein Dämpfungsgrad des Bewegungsdämpfers (13) einstellbar ist, insbesondere mittels eines Stromreglers (16, 17) .

14. Fail-Safe-Antrieb (1) nach Anspruch 12 oder 13, wobei der Bewegungsdämpfer (13) entlang eines Verstellwegs des Verdrängerelements (15) unterschiedliche Dämpfungsgrade bereitstellt, insbesondere wobei ein Dämpfungsgrad im Bereich einer Endlage des Verdrängerelements (15) auf seinem Verstellweg durch die Flüssigkeitskammer (14) größer als ein Dämpfungsgrad in einem Bereich des Verstellwegs des Verdrängerelements (15) zwischen den Endlagen ist.

15. Fail-Safe-Antrieb (1) nach einem der vorherigen Ansprüche, wobei der Fail-Safe-Antrieb (1) eine Arretiervorrichtung (18) aufweist, mit der eine oder die zumindest eine Tellerfeder (7) gespannt gehalten werden kann, und/oder mit der das Gegenelement (5) oder die Kurvenscheibe (8) relativ zu einer oder der eintreibenden Welle (4) fixierbar ist und/oder mit der das Gegenelement (5) und die Kurvenscheibe (8) relativ zueinander fixierbar sind.

16. Fail-Safe-Antrieb (1) nach dem vorherigen Anspruch, wobei die Arretiervorrichtung (18) ein Arretiermittel (19) umfasst, insbesondere das mit einem Rückstellmittel (20), vorzugsweise mit einer Rückstellfeder, in einer Ausgangsstellung nahe einer Arretierstellung angeordnet ist, und/oder wobei die Arretiervorrichtung (18) einen Haftmagnet (21) umfasst, mit dem das Arretiermittel (19) in seine Arretierstellung bringbar und/oder haltbar ist.

17. Fail-Safe-Antrieb (1) nach einem der vorherigen Ansprüche, wobei der Fail-Safe-Antrieb (1) einen Test-Anschlag (22) aufweist, der aus einer Nichtgebrauchsstellung in eine Gebrauchsstellung bewegbar ist, die zwischen einer Spannstellung und einer Entspannungsstellung einer oder der zumindest einen Tellerfeder (7) des Antriebsenergiespeichers (6) und/oder die zwischen zwei Endstellungen des Gegenelements (5) oder der Kurvenscheibe (8) angeordnet ist, insbesondere wobei der Test-Anschlag (22) eine Drehbegrenzung des Gegenelements (5) und/oder der Kurvenscheibe (8) bereitstellt, vorzugsweise wobei der Test-Anschlag (22) elektromechanisch zwischen seiner Nichtgebrauchsstellung und seiner Gebrauchsstellung bewegbar ist.

18. Fail-Safe-Antrieb (1) nach dem vorherigen Anspruch, wobei die Kurvenscheibe (8) oder das Gegenelement (5) des Fail-Safe-Antriebs (1) längsverschieblich auf einer Trägerwelle (2) gelagert ist, insbesondere wobei die Kurvenscheibe (8) oder das Gegenelement (5) und die Trägerwelle (2) zueinander korrespondierend ausgebildete Führungsmittel (37) aufweisen, und/oder wobei die Kurvenscheibe (8) oder das Gegenelement (5) des Fail-Safe-Antriebs (1) drehfest mit der Trägerwelle (2) verbunden ist.

19. Fail-Safe-Antrieb (1) nach einem der vorherigen Ansprüche, wobei zumindest einer Endlage des Fail-Safe-Antriebs (1) ein beweglich, besonders bevorzugt gefedert, gelagerter Endlagenschalter (23), insbesondere ein Mikrotaster, zugeordnet ist, vorzugsweise wobei der Endlagenschalter (23) einem Gegenelement (5) oder einer Kurvenscheibe (8) des Fail-Safe-Antriebs (1) zugeordnet ist.

20. Stellantrieb (42), wobei zumindest einer Endlage des Stellantriebs ein beweglich, bevorzugt gefedert, gelagerter Endlagenschalter (23), insbesondere ein Mikrotaster, zugeordnet ist, wobei der Stellantrieb (1) einen Fail-Safe-Antrieb (1) nach einem der vorherigen Ansprüche aufweist, vorzugsweise wobei der Endlagenschalter (23) einem oder dem Gegenelement (5) des Fail-Safe-Antriebs (1) zugeordnet ist.

21. Stellantrieb (42), insbesondere nach dem vorherigen Anspruch, mit einer zweiten Abtriebswelle (45) und einem Antriebsmotor (43), der zur Übertragung eines Drehmoments zumindest mittelbar mit der Abtriebswelle (45) verbunden ist, und mit einem Fail-Safe-Antrieb (1) nach einem der Ansprüche 1 bis 19.

22. Stellantrieb (42) nach Anspruch 20 oder 21, wobei eine oder die zweite Abtriebswelle (45) des Stellantriebs (42) fixierbar ist, insbesondere mittels einer Bremse und/oder mittels eines selbsthemmenden Getriebes, vorzugsweise mittels eines selbsthemmenden Schneckengetriebes (47), und/oder wobei der Stellantrieb (42) ein Handrad (46) aufweist.

## Claims

1. Fail-safe drive (1) for an actuating drive, the fail-safe drive (1) having a cam disc (8), at least one restoring element, a counter-element (5) and an output shaft (3), the cam disc (8) and the counter-element (5) being configured for the joint conversion of an axial movement of the restoring element into a rotational movement of the output shaft (3), the restoring element moving along an axial direction which is defined by the output shaft, **characterized in that** the cam disc (8) has at least one control cam (10), the profile of which is adapted to a spring characteristic of the at least one restoring element in such a way that, upon activation of the fail-safe drive (1), a constant output torque can be generated.

2. Fail-safe drive (1) according to Claim 1, the fail-safe drive (1) having, as at least one restoring element, a restoring spring, preferably at least one cup spring (7), and/or a drive energy store (6) which comprises at least one cup spring (7), in particular with a non-linear spring characteristic.

3. Fail-safe drive (1) according to Claim 1 or 2, the counter-element (5) being rotatable by way of an axial movement, caused by the restoring element, of the cam disc (8), and the output shaft (3) being rotatable by way of the rotational movement of the counter-element (5), or the cam disc (8) being rotatable by way of an axial movement, caused by the restoring element, of the counter-element (5), and the output shaft (3) being rotatable by way of the rotational movement of the cam disc (8).

4. Fail-safe drive (1) according to one of the preceding claims, the counter-element (5) or the cam disc (8) being an output disc (9), and/or the counter-element (5) or the cam disc (8) being connectable or connected at least indirectly to a driving shaft (4), a connection between the counter-element (5) or the cam disc (8) and the driving shaft (4) preferably being releasable.

5. Fail-safe drive (1) according to one of Claims 1 to 4, the cam disc (8) having at least one control cam (10), the profile of which is adapted to a non-linear spring characteristic of the at least one restoring element, in particular the at least one cup spring (7), in such a way that, upon activation of the fail-safe drive (1), a constant output torque can be generated.

6. Fail-safe drive (1) according to one of Claims 1 to 5, the cam disc (8) being a globoidal cam disc.

7. Fail-safe drive (1) according to one of the preceding claims, the drive energy store (6) comprising at least two, preferably a plurality of, laminated cup springs (7), in particular with a non-linear spring characteristic.

8. Fail-safe drive (1) according to one of the preceding claims, the cam disc (8) having at least two, in particular three or more, control cams (10) which are preferably arranged distributed uniformly around the rotational axis of the cam disc (8).

9. Fail-safe drive (1) according to one of the preceding claims, the counter-element (5), in particular the output disc (9), having at least one output roller (11), in particular a number of output rollers (11) which corresponds to a number of control cams (10) of the cam disc (8), the output rollers (11) being arranged, in particular, distributed uniformly around the rotational axis of the counter-element (5), and/or the at least one output roller (11) being guided in the use position along a control cam (10), assigned to it, of the cam disc (8).

10. Fail-safe drive (1) according to one of the preceding claims with a position indicator (12) for indicating a position of its output shaft (3).

11. Fail-safe drive (1) according to one of the preceding claims, the output shaft (3) being coupled to a movement damper (13) at least indirectly, for example via the counter-element (5) or the cam disc (8).

12. Fail-safe drive (1) according to the preceding claim, the movement damper (13) comprising a liquid chamber (14) which is filled, in particular, with oil, and at least one displacer element (15) which is movable in the former, the displacer element (15) being connected or connectable at least indirectly to the output shaft (3), for example via the counter-element (5) or the cam disc (8).

13. Fail-safe drive (1) according to Claim 11 or 12, a degree of damping of the movement damper (13) being adjustable, in particular by means of a flow regulator (16, 17) .

14. Fail-safe drive (1) according to Claim 12 or 13, the movement damper (13) providing different degrees of damping along an adjustment travel of the displacer element (15), a degree of damping in the region of a limit position of the displacer element (15) on its adjustment travel through the liquid chamber (14), in particular, being greater than a degree of damping in a region of the adjustment travel of the displacer element (15) between the limit positions.

15. Fail-safe drive (1) according to one of the preceding claims, the fail-safe drive (1) having a locking apparatus (18), by way of which the one or the at least one cup spring (7) can be held in a tensioned state, and/or by way of which the counter-element (5) or the cam disc (8) can be fixed relative to an or the driving shaft (4), and/or by way of which the counter-element (5) and the cam disc (8) can be fixed relative to one another.

16. Fail-safe drive (1) according to the preceding claim, the locking apparatus (18) having a locking means (19) which, in particular, is arranged by way of a restoring means (20), preferably by way of a restoring spring, in a starting position close to a locking position, and/or the locking apparatus (18) comprising a clamping magnet (21), by way of which the locking means (19) can be moved into and/or held in its locking position.

17. Fail-safe drive (1) according to one of the preceding claims, the fail-safe drive (1) having a test stop (22) which can be moved out of a non-use position into a use position which is arranged between a tensioned position and a relieved position of a or the at least one cup spring (7) of the drive energy store (6) and/or which is arranged between two limit positions of the counter-element (5) or the cam disc (8), the test stop (22) providing, in particular, a rotational limit of the counter-element (5) and/or the cam disc (8), it being possible, in particular, for the test stop (22) to be moved by electric motor between its non-use position and its use position.

18. Fail-safe drive (1) according to the preceding claim, the cam disc (8) or the counter-element (5) of the fail-safe drive (1) being mounted longitudinally displaceably on a carrier shaft (2), the cam disc (8) or the counter-element (5) and the carrier shaft (2) having guide means (37) of corresponding configuration to one another, and/or the cam disc (8) or the counter-element (5) of the fail-safe drive (1) being connected fixedly to the carrier shaft (2) for conjoint rotation.

19. Fail-safe drive (1) according to one of the preceding claims, at least one limit position of the fail-safe drive (1) being assigned a limit position switch (23), in particular a microswitch, which is mounted in a movable, particularly preferably spring-loaded, manner, the limit position switch (23) preferably being assigned to a counter-element (5) or a cam disc (8) of the fail-safe drive (1).

20. Actuating drive (42), at least one limit position of the actuating drive being assigned a limit position switch (23), in particular a microswitch, which is mounted in a movable, preferably spring-loaded, manner, the actuating drive (1) having a fail-safe drive (1) according to one of the preceding claims, the limit position switch (23) preferably being assigned to a or the counter-element (5) of the fail-safe drive (1).

21. Actuating drive (42), in particular according to the preceding claim, with a second output shaft (45) and a drive motor (43) which is connected at least indirectly to the output shaft (45) for the transmission of a torque, and with a fail-safe drive (1) according to one of Claims 1 to 19.

22. Actuating drive (42) according to Claim 20 or 21, it being possible for a or the second output shaft (45) of the actuating drive (42) to be fixed, in particular by means of a brake and/or by means of a self-locking gear mechanism, preferably by means of a self-locking worm gear mechanism (47), and/or the actuating drive (42) having a handwheel (46).

## Revendications

1. Entraînement à sûreté intégrée (1) pour un mécanisme de commande, lequel entraînement à sûreté intégrée (1) comporte un disque à cames (8), au moins un élément de rappel, un contre-élément (5) et un arbre de sortie (3), le disque à cames (8) et le contre-élément (5) étant équipés pour transformer ensemble un mouvement axial de l'élément de rappel en un mouvement de rotation de l'arbre de sortie (3), l'élément de rappel se déplaçant le long d'une direction axiale définie par l'arbre de sortie, **caractérisé en ce que** le disque à cames (8) comporte au moins une came de commande (10) dont le parcours est adapté de telle sorte à une courbe caractéristique de ressort de l'au moins un élément de rappel qu'un couple de rotation de sortie constant peut être généré lors de l'activation de l'entraînement à sûreté intégrée.

2. Entraînement à sûreté intégrée (1) selon la revendication 1, lequel entraînement à sûreté intégré (1) comporte en guise d'au moins un élément de rappel un ressort de rappel, de préférence au moins un ressort à disque (7) et/ou un accumulateur d'énergie motrice (6) qui comprend au moins un ressort à disque (7), en particulier doté d'une courbe caractéristique de ressort non linéaire.

3. Entraînement à sûreté intégrée (1) selon la revendication 1 ou 2, dans lequel le contre-élément (5) peut être mis en rotation par un mouvement axial du disque à cames (8) provoqué par l'élément de rappel, et dans lequel l'arbre de sortie (3) peut être mis en rotation par le mouvement de rotation du contre-élément (5), ou dans lequel le disque à cames (8) peut être mis en rotation par un mouvement axial du contre-élément (5) provoqué par l'élément de rappel, et dans lequel l'arbre de sortie (3) peut être mis en rotation par le mouvement de rotation du disque à cames (8).

4. Entraînement à sûreté intégrée (1) selon une des revendications précédentes, dans lequel le contre-élément (5) ou le disque à cames (8) est un disque de sortie (9) et/ou dans lequel le contre-élément (5) ou le disque à cames (8) peut être relié ou est relié au moins indirectement à
un arbre d'entrée (4), une liaison entre le contre-élément (5) ou le disque à cames (8) et l'arbre d'entrée (4) étant de préférence détachable.

5. Entraînement à sûreté intégrée (1) selon une des revendications 1 à 4, dans lequel le disque à cames (8) comporte au moins une came de commande (10) dont le parcours est adapté de telle sorte à une courbe caractéristique de ressort non linéaire de l'au moins un élément de rappel, en particulier de l'au moins un ressort à disque (7), qu'un couple de rotation de sortie constant peut être généré lors de l'activation de l'entraînement à sûreté intégrée (1).

6. Entraînement à sûreté intégrée (1) selon une des revendications 1 à 5, dans lequel le disque à cames (8) est un disque à cames globoïdes.

7. Entraînement à sûreté intégrée (1) selon une des revendications précédentes, dans lequel l'accumulateur d'énergie motrice (6) comporte au moins deux, de préférence davantage, ressorts à disque (7), en particulier doté d'une courbe caractéristique de ressort non linéaire.

8. Entraînement à sûreté intégrée (1) selon une des revendications précédentes, dans lequel le disque à cames (8) comporte au moins deux, en particulier trois ou plus, cames de commande (10) de préférence réparties régulièrement autour d'un axe de rotation du disque à cames (8).

9. Entraînement à sûreté intégrée (1) selon une des revendications précédentes, dans lequel le contre-élément (5), en particulier le disque de sortie (9), comporte au moins un galet de sortie (11), en particulier comprend un nombre de galets de sortie (11) qui correspond à un nombre de cames de commande (10) du disque à cames (8), en particulier les galets de sortie (11) étant répartis régulièrement autour d'un axe de rotation du contre-élément (5) et/ou l'au moins un galet de sortie (11) étant guidé, en position d'utilisation, le long d'une came de commande (10) du disque à cames (8) qui lui est associée.

10. Entraînement à sûreté intégrée (1) selon une
des revendications précédentes, pourvu d'un indicateur de position (12) pour indiquer une position de son arbre de sortie (3).

11. Entraînement à sûreté intégrée (1) selon une des revendications précédentes, dans lequel l'arbre de sortie (3) est accouplé au moins indirectement avec un amortisseur de mouvement (13), par exemple par le biais du contre-élément (5) ou du disque à cames (8).

12. Entraînement à sûreté intégrée (1) selon une des revendications précédentes, dans lequel l'amortisseur de mouvement (13) comprend une chambre à liquide (14), en particulier remplie d'huile, et au moins un élément de refoulement (15) pouvant se déplacer à l'intérieur de celle-ci, lequel élément de refoulement (15) est relié ou peut être relié au moins indirectement avec l'arbre de sortie (3), par exemple par le biais du contre-élément (5) ou du disque à cames (8).

13. Entraînement à sûreté intégrée (1) selon la revendication 11 ou 12, dans lequel un degré d'amortissement de l'amortisseur de mouvement (13) est réglable, en particulier au moyen d'un régulateur de courant (16, 17).

14. Entraînement à sûreté intégrée (1) selon la revendication 12 ou 13, dans lequel l'amortisseur de mouvement (13) génère différents degrés d'amortissement le long d'une course de déplacement de l'élément de refoulement (15), en particulier dans lequel un degré d'amortissement dans la région d'une fin de course de l'élément de refoulement (15) sur sa course de déplacement à travers la chambre à liquide (14) est supérieur à un degré d'amortissement dans une région de la course de déplacement de l'élément de refoulement (15) située entre les fins de course.

15. Entraînement à sûreté intégrée (1) selon une des revendications précédentes, lequel entraînement à sûreté intégrée (1) comporte un dispositif de blocage (18) avec lequel un ou l'au moins un ressort à disque (7) peut être maintenu en tension et/ou avec lequel le contre-élément (5) ou le disque à cames (8) peut être fixé par rapport à un ou à l'arbre d'entrée (4) et/ou avec lequel le contre-élément (5) et le disque à cames (8)
peuvent être fixés l'un par rapport à l'autre.

16. Entraînement à sûreté intégrée (1) selon une des revendications précédentes, dans lequel le dispositif de blocage (18) comporte un moyen de blocage (19), en particulier qui est disposé avec un moyen de rappel (20), de préférence avec un ressort de rappel, dans une position de sortie proche d'une position de blocage, et/ou dans lequel le dispositif de blocage (18) comporte un aimant de retenue (21) avec lequel le moyen de blocage (19) peut être mis ou retenu dans sa position de blocage.

17. Entraînement à sûreté intégrée (1) selon une des revendications précédentes, lequel entraînement à sûreté intégrée (1) comporte une butée d'essai (22) qui peut être déplacée d'une position de non-utilisation à une position d'utilisation qui est située entre une position de tension et une position de détente d'un ou de l'au moins un ressort à disque (7) de l'accumulateur d'énergie motrice (6) et/ou qui est située entre deux positions terminales du contre-élément (5) ou du disque à cames (8), en particulier la butée d'essai (22) produisant une limitation de rotation du contre-élément (5) et/ou du disque à cames (8), de préférence la butée d'essai (22) pouvant être déplacée électromécaniquement entre sa position de non-utilisation et sa position d'utilisation.

18. Entraînement à sûreté intégrée (1) selon la revendication précédente, le disque à cames (8) ou le contre-élément (5) de cet entraînement à sûreté intégrée (1) étant monté de façon coulissante longitudinalement sur un arbre porteur (2), en particulier le disque à cames (8) ou le contre-élément (5) et l'arbre porteur (2) comportant des moyens de guidage (37) se correspondant entre eux, et/ou le disque à cames (8) ou le contre-élément (5) de l'entraînement à sûreté intégrée (1) étant relié de manière solidaire en rotation avec l'arbre porteur (2).

19. Entraînement à sûreté intégrée (1) selon une des revendications précédentes, un commutateur de fin de course (23), en particulier un micro-poussoir, monté de façon mobile, de manière particulièrement préférée sur ressort, étant associé à au moins une position terminale de
cet entraînement à sûreté intégrée, de préférence ce commutateur de fin de course (23) étant associé à un contre-élément (5) ou à un disque à cames de cet entraînement à sûreté intégrée (1).

20. Mécanisme de commande (42), au moins une position terminale de ce mécanisme de commande étant associée à un commutateur de fin de course (23) monté de façon mobile, de préférence sur ressort, en particulier à un micro-poussoir, lequel mécanisme de commande (1) comporte un entraînement à sûreté intégrée (1) selon une des revendications précédentes, de préférence le commutateur de fin de course (23) étant associé à un ou au contre-élément (5) de l'entraînement à sûreté intégré (1).

21. Mécanisme de commande (42), en particulier selon le revendication précédente, avec un deuxième arbre de sortie (45) et un moteur d'entraînement (43) qui, pour transmettre un couple de rotation, est relié au moins indirectement à l'arbre de sortie (45), et avec un entraînement à sûreté intégrée (1) selon une des revendications 1 à 19.

22. Mécanisme de commande (42) selon le revendication 21 ou 22, un ou le deuxième arbre de sortie (45) de ce mécanisme de commande (42) pouvant être fixé, en particulier au moyen d'un frein et/ou au moyen d'une transmission autobloquante, de préférence au moyen d'une transmission à vis autobloquante, et/ou ce mécanisme de commande (42) comportant un volant (46).
